# EUROPÄISCHE PATENTANMELDUNG

(11) **EP 4 764 764 A2**
(43) Veröffentlichungstag der Anmeldung: **24.06.2026**
(21) Anmeldenummer: 25225444.6
(22) Anmeldetag: 19.12.2025
(51) Int. Cl.: G05D 23/19, F24D 19/10

(54) **SYSTEM UND VERFAHREN ZUR STEUERUNG EINES HEIZUNGSVENTILS**

(30) Priorität: 23.12.2024 DE 102024139621
(71) Anmelder: termios GmbH, 40474 Düsseldorf (DE)
(72) Erfinder: Ortmann, Markus, 85604 Zorneding (DE); Ebbers, Mirko, 42329 Wuppertal (DE); Kramer, Matthias, 81249 München (DE)
(74) Vertreter: Mötsch, Andreas

(57) **Zusammenfassung**

Die Erfindung betrifft ein System zur Steuerung eines Heizungsventils in einem Raum eines Gebäudes mit einem elektromechanischen Stellglied (12) zur Einstellung eines Durchflusses des Heizungsventils, wenigstens einem Raumklimasensor (21) zur Erfassung von Raumklimadaten, einem Akustiksensor (22) zur Erfassung von Umgebungsgeräuschen und einer Steuereinheit (14) zur Steuerung des Stellglieds (12), wobei das System eine Auswerteeinheit (24) zur Auswertung von Sensordaten aufweist, die mit dem Akustiksensor (22) zur Auswertung der erfassten Umgebungsgeräusche signalverbunden ist, und wobei die Steuereinheit (14) mit der Auswerteeinheit (24) signalverbunden ist, um das Stellglied (12) in Abhängigkeit der vom Akustiksensor (22) erfassten Umgebungsgeräusche zu steuern. Die Erfindung zeichnet sich dadurch aus, dass die Auswerteeinheit (24) einen Datenspeicher (25) umfasst und konfiguriert ist, um basierend auf den erfassten Umgebungsgeräuschen spezifische Geräuschsignaturen zu ermitteln, diese mit im Datenspeicher (25) hinterlegten Geräuschsignaturen zu vergleichen und ein Auswertesignal zu erzeugen, das einer der folgenden Umgebungsbedingungen zugeordnet ist:
a) Offenstehen eines im Raum befindlichen Fensters, insbesondere wobei das Fenster zu einer Außenumgebung hin geöffnet ist,
b) Offenstehen einer zwischen zwei Räumen befindlichen Türe,
c) hydraulisch bedingte Geräuschemissionen am Heizungsventil, und
d) Dämmwertbereich eines im Raum befindlichen Fensters.

Ferner betrifft die Erfindung ein Steuerungsverfahren.

## Beschreibung

Die Erfindung betrifft ein System zur Steuerung eines Heizungsventils gemäß dem Oberbegriff des Patentanspruchs 1. Ferner betrifft die Erfindung ein Verfahren zur Steuerung eines Heizungsventils. Ein System der eingangs genannten Art ist beispielsweise aus EP 3 318 948 B1 bekannt.

EP 3 318 948 B1 betrifft ein System mit einem Heizkörperthermostat, wobei das Heizkörperthermostat ein elektromechanisches Stellglied aufweist, welches auf ein Heizungsventil einwirken kann, um die Stellung des Heizungsventils zu beeinflussen. Ferner ist ein Raumklimasensor in Form eines Raumtemperatursensors vorgesehen, der Raumklimadaten, insbesondere die Raumtemperatur, erfasst. Zusätzlich ist bei dem bekannten Heizkörperthermostat ein Akustiksensor vorgesehen, der Umgebungsgeräusche erfasst. Insbesondere dient der Akustiksensor dazu, die Anwesenheit von Personen oder sonstigen Lebewesen in einem Raum zu ermitteln. Das bekannte Heizkörperthermostat weist außerdem eine Steuereinheit auf, die das Stellglied ansteuern kann, sowie eine Auswerteeinheit, die die vom Raumklimasensor und Akustiksensor erfassten Daten verarbeitet. Die Steuereinheit greift auf diese verarbeiteten Daten zu und steuert das Stellglied insbesondere in Abhängigkeit der vom Akustiksensor erfassten Umgebungsgeräusche.

Mit dem bekannten Heizkörperthermostat wird angestrebt, eine verbesserte und energieeffizientere Steuerung des Raumklimas innerhalb eines Gebäudes zu erzielen. Insbesondere sollen dazu Anwesenheitsdaten von Personen ausgewertet werden, um in Abhängigkeit von An- und Abwesenheiten entsprechende Heizenergie bereitzustellen. So kann dauerhaft eine verbesserte Energieeinsparung erzielt werden. Neben den bekannten Parametern, beispielsweise der aktuellen Raumtemperatur und/oder der Anwesenheit von Personen, gibt es weitere Parameter, die auf die Effizienz eines Heizungssystems Einfluss haben. Die Berücksichtigung dieser weiteren Parameter bietet Potential für eine zusätzliche Verbesserung der Energieeffizienz.

Vor diesem Hintergrund ist es Aufgabe der vorliegenden Erfindung, ein System zur Steuerung eines Heizungsventils in einem Raum eines Gebäudes anzugeben, mit welchem der Heizenergiebedarf innerhalb des Gebäudes bedarfsgerecht angepasst werden kann, um die Energieeffizienz des Gebäudes und den Komfort der Nutzer zu verbessern. Ferner ist es Aufgabe der Erfindung, ein Verfahren zur Steuerung eines Heizungsventils anzugeben.

Erfindungsgemäß wird diese Aufgabe durch das System gemäß Patentanspruch 1 und das Verfahren gemäß Patentanspruch 16 gelöst.

Die Erfindung beruht konkret auf dem Gedanken, ein System zur Steuerung eines Heizungsventils in einem Raum eines Gebäudes mit einem elektromechanischen Stellglied zur Einstellung eines Durchflusses des Heizungsventils, wenigstens einem Raumklimasensor zur Erfassung von Raumklimadaten, mindestens einem Akustiksensor zur Erfassung von Umgebungsgeräuschen und einer Steuereinheit zur Steuerung des Stellglieds anzugeben. Das System weist ferner eine Auswerteeinheit zur Auswertung von Sensordaten auf, die mit dem Akustiksensor zur Auswertung der erfassten Umgebungsgeräusche signalverbunden ist. Die Steuereinheit ist außerdem mit der Auswerteeinheit signalverbunden, um das Stellglied unter anderem in Abhängigkeit der vom Akustiksensor erfassten Umgebungsgeräusche zu steuern. Erfindungsgemäß umfasst die Auswerteeinheit einen Datenspeicher und ist konfiguriert, um basierend auf den erfassten Umgebungsgeräuschen spezifische Geräuschsignaturen zu ermitteln, diese mit im Datenspeicher hinterlegten Geräuschsignaturen zu vergleichen und ein Auswertesignal zu erzeugen, das einer der folgenden Umgebungsbedingungen zugeordnet ist:
a) Offenstehen eines im Raum befindlichen Fensters, insbesondere wobei das Fenster zu einer Außenumgebung hin offensteht,
b) Offenstehen einer zwischen zwei Räumen befindlichen Türe,
c) hydraulisch bedingte Geräuschemissionen am Heizungsventil, und
d) Dämmwertbereich eines im Raum befindlichen Fensters.

Das erfindungsgemäße System nutzt ebenso wie der bekannte Stand der Technik einen Akustiksensor, setzt diesen jedoch zu anderen Zwecken ein. Konkret wird der Akustiksensor bei der Erfindung genutzt, um eine der zuvor genannten vier Funktionen abzubilden, die nachfolgend näher erläutert werden.

Grundsätzlich sind im Stand der Technik bereits Systeme zur Steuerung von Heizungsventilen bekannt, die die Erkennung von geöffneten Fenstern ermöglichen. Dazu werden entweder in das Fenster integrierte Fenstersensoren genutzt oder die Daten eines Raumtemperatursensors ausgewertet, wobei bei einem schnellen Abfall der Temperatur davon ausgegangen wird, dass ein Fenster geöffnet wurde. Diese bekannten Technologien haben jedoch mehrere Nachteile. Entweder sind zusätzliche Sensoren notwendig, beispielsweise im Fenster, die einen entsprechenden Installationsaufwand erfordern. Insbesondere müssen derartige Sensoren üblicherweise mit elektrischer Energie versorgt werden, was eine zusätzliche Elektroninstallation oder den regelmäßigen Austausch von Batterien benötigt. Bei der Erkennung des Öffnens eines Fensters durch das spontane Abfallen der Raumtemperatur besteht das Problem darin, dass zwar das Öffnen eines Fensters erkannt werden kann. Sobald das Fenster jedoch geöffnet ist, gleichen sich Außentemperatur und Innentemperatur an, so dass weder das dauerhafte Offenstehen des Fensters noch das Schließen des Fensters gut erkennbar ist.

Die Erfindung setzt den Akustiksensor ein, um anhand von Geräuschen außerhalb des Gebäudes eine entsprechende Geräuschsignatur zu ermitteln, deren Auswertung dann zu dem Ergebnis führen kann, dass ein Fenster dauerhaft offensteht. Die Auswertung erfolgt dabei durch einen Vergleich der ermittelten Geräuschsignatur mit einer oder mehreren im Datenspeicher hinterlegten Geräuschsignaturen. Die im Datenspeicher hinterlegten Geräuschsignaturen können durch eine Berechnung, insbesondere einer statistischen Berechnung auf Basis einer Vielzahl von repräsentativ ermittelten Geräuschsignaturen, gebildet sein. Sobald eine solche Geräuschsignatur, die das dauerhafte Offenstehen des Fensters repräsentiert, nicht mehr erkannt wird, kann davon ausgegangen werden, dass das Fenster wieder geschlossen wurde. So ermöglicht es die Erfindung, nicht nur das Öffnen des Fensters (einmaliger Vorgang), sondern das Offenstehen eines Fensters (dauerhafter Öffnungszustand) für die Steuerung des Heizungsventils zu berücksichtigen.

Die mittels des Akustiksensors und der Auswerteeinheit ermittelten Geräuschsignaturen der Umgebungsgeräusche aus der Außenumgebung des Gebäudes können weiterhin genutzt werden, um Rückschlüsse auf den Zustand der Gebäudehülle zu ziehen. Wenn der Akustiksensor einerseits Außengeräusche ermittelt und die Auswerteeinheit daraus eine entsprechende Geräuschsignatur für Außengeräusche festlegt, so kann über einen Vergleich mit einer Geräuschsignatur bei geschlossenem Fenster ein Rückschluss über den Dämmwert, zumindest in einem Dämmwertbereich, eines Fensters gezogen werden. Dabei kann sowohl ein Schalldämmwert des Fensters, als auch ein Wärmedämmwert ermittelt werden. Insbesondere aus einem direkt ermittelten Schalldämmwert kann eine Abschätzung des Wärmedämmwerts des Fensters erfolgen, zumindest in einem gewissen Wärmedämmwertbereich. Auf diese Weise kann das erfindungsgemäße System Erkenntnisse über den Wärmedämmwertbereich des im Raum befindlichen Fensters ziehen, was wiederum einen Rückschluss auf die thermischen Eigenschaften der Gebäudehülle zulässt. Diese Daten können vorteilhaft genutzt werden, um die Steuerung eines Heizungsventils zu optimieren oder zumindest Handlungsanweisungen zu erzeugen, anhand welcher beispielsweise Empfehlungen für Sanierungsmaßnahmen abgeleitet werden können. Ein besonderer Vorteil dieser Funktion besteht darin, dass der Wärmedämmwertbereich der Fenster regelmäßig überprüft werden kann, so dass auch im zeitlichen Verlauf nachlassende Dämmwerte erfasst werden, woraus sich Empfehlungen für zukünftig erforderliche Sanierungsmaßen ergeben können.

Für die Effizienz von Heizungssystemen in Gebäuden ist es zudem zweckmäßig, wenn einzelraumgesteuerte Temperaturregelungen aufeinander abgestimmt werden. Insbesondere in Wohngebäuden sind in unterschiedlichen Räumen verschiedene Temperaturen vorgesehen. So sollen die meisten Wohnräume mit 20 °C temperiert sein, wogegen beispielsweise Badezimmer oft eine Temperatur von 24 °C aufweisen sollen, jedenfalls innerhalb der Benutzungszeiten. Für die Gesamteffizienz eines Gebäudes ist es insofern relevant, ob beispielsweise zwischen Räumen, die unterschiedliche Raumtemperaturen aufweisen sollen, Türen geöffnet sind.

Erkenntnisse über geöffnete oder geschlossene Türen sind für die Steuerung von Heizungsventilen vorteilhaft, um die Energieeffizienz eines Gebäudes zu verbessern. Insofern sieht das erfindungsgemäße System vor, anhand von durch den Akustiksensor erfassten spezifisch generierten Geräuschsignalen und der durch die Auswerteeinheit daraus erstellten Geräuschsignaturen zu ermitteln, ob eine Tür in einem Raum geöffnet ist. Dies kann beispielsweise dadurch erfolgen, dass in einem von zwei miteinander durch eine Türe verbundenen Räumen ein Tongeber installiert ist, der zu einem vorbestimmten Zeitpunkt einen Ton emittiert, welcher vom Akustiksensor des hier beschriebenen Systems erfasst werden kann, wobei der Akustiksensor in dem benachbarten Raum angeordnet ist. Wird das Tonsignal vom Akustiksensor erfasst, so ist davon auszugehen, dass die Türe zwischen den beiden Räumen geöffnet ist. Erfolgt keine Erfassung des zuvor abgegebenen Tonsignals, so ist davon auszugehen, dass die Türe geschlossen ist. Auf diese einfache Weise kann eine Erkennung von geöffneten Türen erfolgen, wobei auch hier nicht nur der Öffnungsvorgang, sondern insbesondere das dauerhafte Offenstehen einer Türe erkannt wird, worauf die Steuereinheit reagieren kann, um das Heizungsventil, insbesondere mehrere Heizungsventile von Heizkörpern in zueinander benachbarten Räumen, so zu betätigen, dass innerhalb einer Wohneinheit mit mehreren Räumen, insbesondere im Gesamtgebäude, eine verbesserte energieeffiziente Wärmeverteilung erfolgt.

Ein weiteres Problem, insbesondere bei Bestandsgebäuden im Altbau, besteht darin, dass durch Veränderung von Druckverhältnissen bzw. Strömungsverhältnissen im Wärmemedium, welches das Heizungsventil durchströmt, unerwünschte Geräuschemissionen entstehen können. In der Praxis zeigt sich dies oft durch ein Rauschen, Pfeifen oder Blubbern, welches für Personen im Raum, insbesondere Bewohner eines Wohnraums, als störend empfunden wird. Oft treten rauschende oder pfeifende Geräusche insbesondere dann auf, wenn der hydraulische Abgleich innerhalb eines Gebäudes nicht optimal eingestellt ist und sich das Heizungsventil in einer fast geschlossenen oder nur leicht geöffneten Stellung befindet. Bei dem erfindungsgemäßen System kann mittels des Akustiksensors und der Auswerteeinheit eine Geräuschsignatur einer derartigen Geräuschemission des Heizungsventils ermittelt und entsprechend das Stellglied über die Steuereinheit beispielsweise dazu veranlasst werden, das Heizungsventil etwas weiter zu öffnen, so dass die Geräuschemission eliminiert wird. Ferner können aus den Geräuschsignaturen auch Handlungsempfehlungen abgeleitet werden, beispielsweise um einen hydraulischen Abgleich erneut durchzuführen, das Heizungssystem erneut zu entlüften, oder die Leistung einer Heizungspumpe anzupassen, insbesondere deren Leistung zu reduzieren.

Der Vorteil der Erfindung besteht also insgesamt darin, dass durch weitere Daten, die über den Akustiksensor aus der Umgebung ermittelt werden, die Steuerung des Heizungsventils feingliedrig und damit so gestaltet sein kann, dass die Wärmeenergie, die in den Raum eingetragen wird, optimiert genutzt werden kann. Die damit mögliche Energieeinsparung ist signifikant und führt, wenn das System flächendeckend in einem Gebäude eingesetzt wird, zusätzlich zu erheblichen Kosteneinsparungen. Insbesondere lässt sich damit die energetische Effizienz eines Gebäudes insgesamt verbessern, wenn das System vollständig in eine Gebäudeheizungsanlage integriert ist und beispielsweise auch die Steuerung von Heizungspumpen der Gebäudeheizungsanlage übernimmt. Entscheidend ist dabei, dass insbesondere in Bestandsgebäuden, die mit fossilen Brennstoffen geheizt werden, neben der Kosteneinsparung auch eine deutliche Reduktion von CO₂-Emissionen erreicht wird. Insbesondere, wenn das Gesamtgebäude mit dem System ausgerüstet ist, erhöht sich zudem der Wohnkomfort für die Bewohner, insbesondere Mieter, des Gebäudes, da das hier beschriebene System kontinuierlich einen dynamischen hydraulischen Abgleich ermöglicht. Ein Betreten einzelner Wohneinheiten zur Durchführung des hydraulischen Abgleichs ist nicht erforderlich.

Bei einer bevorzugten Ausführungsform des erfindungsgemäßen Systems weist dieses zusätzlich einen Anwesenheitssensor zur Erfassung von Anwesenheitsdaten über die Anwesenheit von Lebewesen im Raum auf, wobei der Anwesenheitssensor mit der Auswerteeinheit signalverbunden ist und die Auswerteeinheit konfiguriert ist, um die Anwesenheitsdaten auszuwerten und die Steuereinheit dazu zu veranlassen, das Stellglied in Abhängigkeit der vom Anwesenheitssensor erfassten Anwesenheitsdaten zu steuern. Dabei kann der Anwesenheitssensor vom Akustiksensor unabhängig sein. Insbesondere kann der Anwesenheitssensor einen Radarsensor umfassen. Bei einer besonderen Variante der Erfindung ist der Anwesenheitssensor ausschließlich durch einen Radarsensor gebildet.

Die Erfassung von Anwesenheitsdaten bietet eine weitere verbesserte Möglichkeit, um das Heizungsventil energieeffizient zu steuern. So kann beispielsweise die Raumtemperatur zu Zeiten, in welchen sich keine Lebewesen, insbesondere Personen, in dem Raum befinden, reduziert werden. Dabei kann auch vorgesehen sein, die Steuerung prädiktiv zu gestalten, indem über einen längeren Zeitraum die Anwesenheit von Personen erfasst wird. Daraus kann abgeleitet werden, wann sich Personen üblicherweise in dem Raum befinden. Insbesondere bei Badezimmern, die während der Benutzungszeiten auf eine erhöhte Temperatur gebracht werden sollen, kann somit eine erhebliche Energieeinsparung erreicht werden.

Die Verwendung eines Radarsensors hat den besonderen Vorteil, dass dieser besonders energieeffizient betrieben werden kann. Der Energieaufwand, der für das System selbst erforderlich ist, insbesondere, wenn dieses zumindest teilweise in ein Heizkörperthermostat integriert ist, kann auf diese Weise begrenzt werden. Damit geht also zusätzlich eine Energieeffizienz im Hinblick auf den elektrischen Energiebedarf des Systems einher.

Im Hinblick auf die Energieeffizienz des Systems ist es außerdem vorteilhaft, wenn der Akustiksensor einen Grundzustand aufweist, in welchem der Akustiksensor deaktiviert ist. Der Betrieb eines Akustiksensors ist im Regelfall relativ energieaufwändig, da der Akustiksensor dauerhaft mit elektrischer Energie versorgt werden muss. Indem der Akustiksensor in seinem Grundzustand jedoch deaktiviert ist, wird der Bedarf an elektrischer Energie für den Akustiksensor signifikant reduziert. Ein weiterer Vorteil ergibt sich hinsichtlich des Datenschutzes, da ein dauerhafter Betrieb eines Akustiksensors üblicherweise unerwünscht ist. Ein Akustiksensor, insbesondere ein Mikrofon, würde andernfalls dauerhaft lauschen, so dass Personen berechtigterweise besorgt sein könnten, abgehört zu werden. Insofern ist es zweckmäßig, den Akustiksensor im Grundzustand deaktiviert zu lassen und nur dann in Benutzung zu nehmen, wenn eine Erfassung von Umgebungsgeräuschen erforderlich ist.

Insofern ist bevorzugt vorgesehen, dass der Akustiksensor durch ein Aktivierungssignal der Auswerteeinheit in einen Betriebszustand überführbar ist, wobei die Auswerteeinheit konfiguriert ist, das Aktivierungssignal zu erzeugen, wenn eine anhand der Auswertung des Raumklimasensors und/oder des Anwesenheitssensors vorbestimmte Aktivierungsbedingung erfüllt ist. Bei dieser bevorzugten Ausführungsform der Erfindung wird der Akustiksensor also nur dann aktiviert, wenn andere Sensordaten einen entsprechenden Impuls geben, der Veranlassung dazu gibt, Umgebungsgeräusche zu erfassen. Für die Erkennung von offenstehenden Fenstern kann beispielsweise ein schnelles Abfallen der Raumtemperatur in einem kurzen Zeitraum als Impuls genutzt werden, um den Akustiksensor zu aktivieren. Der Akustiksensor erfasst infolge dieses Impulses für einen beispielsweise begrenzten Zeitraum Umgebungsgeräusche, die der Auswerteeinheit als Geräuschdaten übermittelt werden. Anhand der Geräuschdaten kann die Auswerteeinheit dann eine Geräuschsignatur ermitteln, speichern und diese mit Geräuschsignaturen vergleichen, die in einem Datenspeicher hinterlegt sind. Ergibt der Vergleich der Auswerteeinheit, dass offensichtlich Außengeräusche erfasst werden, die auf das Offenstehen eines Fensters hindeuten, so kann über die Steuereinheit eine entsprechende Steuerung des Heizungsventils erfolgen. Im Hinblick auf die Energieeffizienz des Systems ist es dann weiterhin zweckmäßig, wenn der Akustiksensor in regelmäßigen Abständen, beispielsweise in Zeitabständen von 5 Minuten, kurzzeitig aktiviert wird, um erneut Umgebungsgeräusche zu erfassen. Dieser regelmäßige Vorgang kann so lange wiederholt werden, bis die Auswerteeinheit aus den erfassten Umgebungsgeräuschen eine Geräuschsignatur ermittelt, die darauf hindeutet, dass das Fenster geschlossen ist. Ab diesem Zeitpunkt kann der Akustiksensor dauerhaft deaktiviert, also in den Grundzustand versetzt, werden, bis ein erneuter Impuls über den Raumklimasensor erfolgt, der zu einer Aktivierung des Akustiksensors führt.

Einen ähnlichen Impuls kann beispielsweise der Anwesenheitssensor bereitstellen. So kann beispielsweise die Anwesenheit von Personen über den Anwesenheitssensor erfasst werden. Erfasst der Anwesenheitssensor keine Personen oder Lebewesen im Raum, kann dies als Impuls für die Aktivierung des Akustiksensors verwendet werden. Der Akustiksensor wird dann in den Betriebszustand versetzt und kann beispielsweise nach einem Signal eines Tongebers in einem benachbarten Raum horchen. Erfasst der Akustiksensor daraufhin das Tonsignal des Tongebers aus dem benachbarten Raum, so lässt sich über die Auswerteeinheit die Erkenntnis ableiten, dass eine Türe zwischen zwei benachbarten Räumen geöffnet ist. Auch dieser Vorgang kann regelmäßig wiederholt werden, bis entweder kein Tonsignal mehr erfasst wird, woraus sich ableiten lässt, dass die Türe zwischenzeitlich geschlossen wurde, und/oder der Anwesenheitssensor wieder Personen im Raum erfasst. Sobald eines dieser Ereignisse eintritt, wird der Akustiksensor wieder in den Grundzustand versetzt.

Zusätzlich ist es möglich, dass die Auswerteeinheit nach einem vorbestimmten Zeitplan oder durch eine entsprechend manuelle Eingabe dazu veranlasst wird, das Aktivierungssignal zu erzeugen.

Bei einer weiteren bevorzugten Ausführungsform des erfindungsgemäßen Systems umfasst das System ein Heizkörperthermostat mit einem Gehäuse, wobei der Raumklimasensor, der Akustiksensor, der Anwesenheitssensor, das Stellglied und/oder die Steuereinheit innerhalb des Gehäuses angeordnet ist. Die Hauptkomponenten des Systems können also in kompakter Weise in ein Heizkörperthermostat integriert sein. Das erleichtert die Installation des Systems und reduziert den Montageaufwand.

Besonders bevorzugt ist es, wenn das Heizkörperthermostat, insbesondere das Gehäuse, einen Verbindungsflansch zur mechanischen Kopplung an das Heizungsventil aufweist. Das Heizungsventil kann in diesem Fall ein Heizkörperventil, insbesondere eines freistehenden oder wandmontierbaren Heizkörpers bzw. Radiators, sein. Das Heizkörperthermostat kann insbesondere eingerichtet sein, um unmittelbar an einem Heizkörperventil eines bestehenden Heizkörpers befestigt zu werden. Das vermeidet die Installation von elektrischen Verbindungen innerhalb eines Raums. Vielmehr kann das Heizkörperthermostat bestehende, mechanische Heizkörperthermostate ersetzen und so einfach und schnell in Bestandsgebäuden nachgerüstet werden. Für die Anbindung an Heizkörperventile verschiedener Hersteller können entweder unterschiedliche Verbindungsflansche oder entsprechende Adapter vorgesehen sein.

Im Hinblick auf die Energieversorgung des Systems, insbesondere des Heizkörperthermostats, ist vorteilhaft vorgesehen, dass das Heizkörperthermostat, insbesondere innerhalb des Gehäuses, einen thermoelektrischen Generator zur Erzeugung von elektrischer Energie aus einer Temperaturdifferenz zwischen einem das Heizungsventil durchströmenden Wärmemedium und der Umgebung aufweist. Bei dieser Variante nutzt das Heizkörperthermostat zur eigenen Energieversorgung das Prinzip des thermischen Energy Harvesting, wobei durch die Temperaturdifferenz zwischen Wärmemedium des Heizkörpers und der Umgebungsluft eine ausreichende elektrische Energie erzeugt wird, um die elektrischen und elektronischen Komponenten des Heizkörperthermostats mit elektrischer Energie zu versorgen. Der besondere Vorteil besteht bei dieser Variante darin, dass auf eine zusätzliche Energieversorgung, beispielsweise durch eine Elektroinstallation oder austauschbare Batterien, verzichtet werden kann. Das System ist damit besonders wartungsarm und ausfallsicher.

Das System kann, vorzugsweise innerhalb des Gehäuses des Heizkörperthermostats, zusätzlich einen akustischen Tongeber umfassen. Der akustische Tongeber ist insbesondere vorteilhaft, um die Funktion zur Erkennung von geöffneten Türen zwischen zwei Räumen in einem Gebäude zu verbessern. So kann in jedem der Räume ein Tongeber, insbesondere integriert in ein hier beschriebenes Heizkörperthermostat, installiert sein. Über eine entsprechende Ansteuerung kann zu einem bestimmten Zeitpunkt einerseits der Tongeber in einem ersten Raum, insbesondere in einem im ersten Raum befindlichen ersten Heizkörperthermostat, aktiviert werden und andererseits der Akustiksensor in einem benachbarten, zweiten Raum, insbesondere eines im benachbarten, zweiten Raum befindlichen Heizkörperthermostats, in den Betriebszustand versetzt werden, so dass das vom Tongeber des ersten Raums ausgegebene Schallsignal am Akustiksensor des zweiten Raums erfasst werden und daraus abgeleitet werden kann, ob eine Türe zwischen den beiden Räumen geöffnet ist.

Bei dem hier beschriebenen System kann der eingesetzte Raumklimasensor einen Raumtemperatursensor zur Erfassung einer Raumtemperatur und/oder einen Luftfeuchtigkeitssensor zur Erfassung der relativen Raumluftfeuchte umfassen.

Der Raumklimasensor kann darüber hinaus auch weitere oder alternative Sensoren aufweisen. Denkbar ist beispielsweise auch die Verwendung eines Gassensors, insbesondere zur Erfassung einer Kohlendioxidkonzentration in der Raumluft.

Generell kann bei dem hier beschriebenen System vorgesehen sein, dass mehrere Heizkörperthermostate vorhanden sind, die mittels der Auswerteeinheit miteinander signalverbunden sind. Dabei kann die Auswerteeinheit konfiguriert sein, die Sensordaten mehrerer Heizkörperthermostate gemeinsam auszuwerten und Auswertesignale zur Übermittlung an die Steuereinheiten der einzelnen Heizkörperthermostate zu erzeugen, so dass eine raumübergreifende, insbesondere wohneinheitenübergreifende, Heizungssteuerung erfolgt. Ein solches System mit mehreren Heizkörperthermostaten ist besonders gut geeignet, um die Energieeffizienz eines gesamten Gebäudes zu verbessern. Insbesondere ist es in diesem Zusammenhang zweckmäßig, wenn alle Räume eines Gebäudes, insbesondere eines Wohngebäudes, mit derartigen Heizkörperthermostaten ausgestattet sind. So kann über alle Heizkörperthermostate hinweg eine Auswertung der Sensordaten erfolgen, so dass daraus eine besonders effiziente Heizungssteuerung für das Gesamtgebäude abgeleitet werden kann. Es hat sich gezeigt, dass auf diese Weise die Energieeffizienz eines Gebäudes erheblich verbessert werden kann, insbesondere erhebliche CO₂-Einsparungen in Gebäuden erzielt werden, die mit fossilen Brennstoffen beheizt werden. Die Auswerteeinheit kann auch konfiguriert sein, um ausgehend von den Daten der Sensoren des Systems weitere hydraulische Komponenten eines Heizungssystems, beispielsweise auch eine oder mehrere Heizungspumpen, zu steuern.

Das hier beschriebene System kann grundsätzlich in unterschiedlichen Ausgestaltungen vorgesehen sein. Einerseits kann jedes Heizkörperthermostat eine integrierte Auswerteeinheit umfassen. Die Auswerteeinheiten verschiedener Heizkörperthermostate können untereinander in Verbindung stehen, insbesondere in Funkverbindung, um eine gemeinsame Auswertung der Sensordaten aller Heizkörperthermostate zu ermöglichen. Die Auswerteeinheit kann insofern durch einen Mikrocontroller innerhalb des Heizkörperthermostats gebildet sein. Es ist jedoch auch möglich, dass alle Heizkörperthermostate über eine, vorzugsweise funkbasierte, Verbindung mit einer zentralen Auswerteeinheit, beispielsweise einem Computer oder Server in einem Rechenzentrum, signalgekoppelt sind. Die Auswerteeinheit kann folglich als cloudbasierte Lösung vorgesehen sein. Dabei werden die Sensordaten oder zumindest die von einzelnen Auswerteeinheiten in den Heizkörperthermostaten ermittelten Geräuschsignaturen an eine zentrale Auswerteeinheit übermittelt, die daraufhin eine Gesamtauswertung für ein Gebäude durchführt. Die Auswerteeinheit stellt basierend auf ihrer Auswertung Auswertedaten bereit, die dann an die jeweiligen Steuereinheiten der Heizkörperthermostate verteilt werden, so dass die einzelnen Heizkörperthermostate gezielt basierend auf gebäudeübergreifenden Optimierungsalgorithmen angesteuert werden.

Insofern ist bei bevorzugten Ausführungsformen der Erfindung vorgesehen, dass die Auswerteeinheit im Heizkörperthermostat, insbesondere innerhalb des Gehäuses, angeordnet ist. Alternativ oder zusätzlich kann das System, insbesondere das Heizkörperthermostat ein Funkmodul umfassen, das den Akustiksensor und/oder die Steuereinheit mit der Auswerteeinheit signalverbindet. Dabei ist nicht ausgeschlossen, dass mehrere Systeme, insbesondere mehrere einzelne Heizkörperthermostate, separate Auswerteeinheiten aufweisen, die über eine übergeordnete, vorzugsweise cloudbasierte, gemeinsame Auswerteeinheit miteinander in einer Kommunikationsverbindung stehen.

Die vorliegende Erfindung betrifft auch ein Verfahren zur Steuerung eines Heizungsventils in einem Raum eines Gebäudes mit einem Heizkörperthermostat, einem elektromechanischen Stellglied zur Einstellung eines Durchflusses des Heizungsventils, einem Raumtemperatursensor zur Erfassung der Raumtemperatur, einem Akustiksensor zur Erfassung von Umgebungsgeräuschen und einer Steuereinheit zur Steuerung des Stellglieds. Bei dem erfindungsgemäßen Verfahren werden mittels des Akustiksensors Umgebungsgeräusche umfasst und als Geräuschdaten an eine Auswerteeinheit übermittelt. Die Auswerteeinheit ermittelt aus den Geräuschdaten spezifische Geräuschsignaturen, vergleicht diese mit in einem Datenspeicher der Auswerteeinheit hinterlegten Geräuschsignaturen und erzeugt aus diesem Vergleich jeweils ein Auswertesignal, das einer der folgenden Umgebungsbedingungen zugeordnet ist:
a) Wenigstens ein Fenster im Raum steht offen,
b) wenigstens eine zwischen zwei Räumen befindlichen Türe steht offen,
c) vom Heizungsventil oder von wenigstens einem Heizkörper werden hydraulisch bedingte Geräusche emittiert, und
d) im Raum befindliche Fenster weisen einen Dämmwert innerhalb eines Dämmwertbereichs auf.

Die Steuereinheit steuert das Stellglied anhand des jeweiligen Auswertesignals der Auswerteeinheit.

Die im Zusammenhang mit dem zuvor beschriebenen System genannten Vorteile und bevorzugten Ausführungsformen gelten analog auch für das hier beschriebene Verfahren. Insbesondere ist das hier beschriebene Verfahren geeignet, um in dem zuvor beschriebenen System umgesetzt zu werden. Insofern betrifft die Erfindung auch ein Steuerungsverfahren, welches mit dem zuvor beschriebenen System durchgeführt wird.

Die Erfindung wird im Folgenden anhand von Ausführungsbeispielen unter Bezugnahme auf die beigefügten, schematischen Zeichnungen näher erläutert. Darin zeigen
Fig. 1 eine perspektivische Darstellung eines erfindungsgemäßen Systems nach einem bevorzugten Ausführungsbeispiel, wobei das System einschließlich der Auswerteeinheit vollständig innerhalb eines Heizkörperthermostats integriert ist; und
Fig. 2 ein Blockschaltbild eines erfindungsgemäßen Systems nach einem weiteren bevorzugten Ausführungsbeispiel, wobei mehrere Heizkörperthermostate über eine gemeinsame Auswerteeinheit in Funkverbindung stehen.

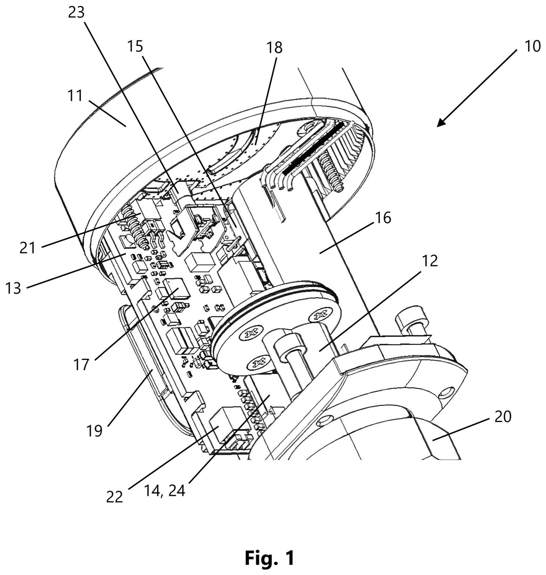

Das in Fig. 1 dargestellt System ist vollständig in ein Heizkörperthermostat 10 integriert. Das Heizkörperthermostat 10 weist ein Gehäuse 11 auf, wobei das Gehäuse 11 bei dieser Ausführungsart zwei Gehäuseteile umfasst. Ein ventilnahes Gehäuseteil ist in der Zeichnung nicht dargestellt, so dass Einblick in den Innenraum des Heizkörperthermostats 10 genommen werden kann. Ein peripheres Gehäuseteil, das als Drehrad ausgebildet ist, ist hingegen gezeigt. Das Drehrad ermöglicht es einem Nutzer, Nutzereingabedaten zu erzeugen. Insbesondere kann auf diese Weise die gewünschte Heiztemperaturstufe eingestellt werden.

Innerhalb des Heizkörperthermostats 10, insbesondere des Gehäuses 11, ist ein Stellantrieb 12 angeordnet, der auf ein Heizungsventil einwirken kann. Über den Stellantrieb 12 kann die Durchflussleistung des Heizungsventils angepasst werden.

Das Heizkörperthermostat 10 weist innerhalb des Gehäuses 11 ferner eine Leiterplatte 13 auf, die mehrere elektronische Bauteile trägt. Insbesondere ist eine Steuereinheit 14 in Form eines Mikrocontrollers vorgesehen, die mit dem Stellantrieb 12 verbunden ist, um Steuerbefehle an den Stellantrieb 12 zu übermitteln. Anhand der Steuerbefehle kann der Stellantrieb 12 eingestellt werden und so die Ventileinstellung des Heizungsventils beeinflussen.

Auf der Leiterplatte 13 ist ferner ein Anwesenheitssensor 15 angeordnet, der insbesondere als Radarsensor ausgebildet ist. Der Radarsensor umfasst eine Sende- und Empfangseinheit sowie eine Radarantenne. Die Radarantenne kann als gerichtete Radarantenne ausgebildet sein.

Innerhalb des Gehäuses 11 ist ein Energiepufferspeicher 16 angeordnet. Der Energiepufferspeicher 16 ist vorzugsweise als wiederaufladbare Batterie gestaltet. Insbesondere kann hierfür eine Lithium-Ionen-Batterie, vorzugsweise eine 18650-Zelle oder eine 14500-Zelle, eingesetzt werden. Der Energiepufferspeicher 16 ist mit einem thermoelektrischen Generator gekoppelt, der in Fig. 1 nicht erkennbar ist. Der thermoelektrische Generator befindet sich vorzugsweise nahe des Heizungsventils am Boden des ventilnahen Gehäuseteils. Der thermoelektrische Generator ist dazu ausgelegt, aus einer Temperaturdifferenz zwischen einem Wärmemedium, das das Heizungsventil durchströmt, und der Umgebung des Heizkörperthermostats 10 elektrische Energie zu gewinnen. Diese elektrische Energie wird im Energiepufferspeicher 16 zwischengespeichert, so dass für kurzzeitig hohe Energieanforderungen immer ausreichend elektrische Energie verfügbar ist.

Das System weist zusätzlich ein Funkmodul 17 auf, das eine Funkantenne 18 umfasst. Das Funkmodul 17 ist insbesondere durch ein Sende- und Empfangsmodul und die Funkantenne 18 gebildet. Das Sende- und Empfangsmodul und die Funkantenne 18 können räumlich voneinander beabstandet angeordnet sein. Das Sende- und Empfangsmodul kann auf der Leiterplatte 13 angeordnet sein. Die Funkantenne 18 ist insbesondere im peripheren Gehäuseteil des Gehäuses 11 platziert. Konkret kann die Funkantenne 18 auf einer weiteren Leiterplatte angeordnet sein, die im peripheren Gehäuseteil befestigt ist. Die weitere Leiterplatte kann senkrecht auf der Leiterplatte 13 montiert sein.

Die Leiterplatte 13 weist eine Innenseite auf, die im Wesentlichen in das Innere des Gehäuses 11 gerichtet ist. Auf einer der Innenseite gegenüberliegenden Außenseite kann die Leiterplatte 13 ein Anzeigeelement 19 tragen. Das Anzeigeelement 19 kann als ePaper-Display ausgebildet sein. Ferner kann das Anzeigeelement 19 einen weiteren integrierten Energiepufferspeicher, insbesondere eine weitere wiederaufladbare Batterie, umfassen. Es kann ein weiterer Mikrocontroller zur Steuerung des ePaper-Displays in das Anzeigeelement 19 integriert sein. Der hier nicht dargestellte, ventilnahe Gehäuseteil kann im Bereich des Anzeigeelements 19 ein transparentes Fenster aufweisen, so dass das Anzeigeelement 10 von außerhalb des Heizkörperthermostats 10 sichtbar ist.

Um das Heizkörperthermostat 10 an ein Heizungsventil, insbesondere ein Heizkörperventil, anbinden zu können, ist ein Verbindungsflansch 20 vorgesehen. Der Verbindungsflansch 20 ist bei dem hier dargestellten Ausführungsbeispiel gemäß Fig. 1 als Schraubenmutter ausgebildet, die auf ein entsprechendes Außengewinde eines Heizungsventils aufgeschraubt werden kann. Der Verbindungsflansch 20 ist vorzugsweise so gestaltet, dass zwischen dem Heizkörperthermostat 10 und dem Heizungsventil ein gut wärmeübertragender, flächiger Kontakt besteht.

Bei dem in Fig. 1 dargestellten System zur Steuerung eines Heizungsventils sind mehrere zusätzliche Sensoren vorgesehen. Insbesondere trägt die Leiterplatte 13 einen Raumklimasensor 21 und einen Akustiksensor 22. Dabei sind der Raumklimasensor 21 und der Akustiksensor 22 innerhalb des Gehäuses 11 positioniert. Generell ist es auch möglich, einzelne Komponenten des Systems außerhalb des Heizkörperthermostats 10 zu platzieren. Beispielsweise kann der Akustiksensor 22 beabstandet von dem Heizkörperthermostat 10 in einem Raum positioniert sein. Bevorzugt ist jedoch die kompakte Gestaltung als Heizkörperthermostat 10, bei welchem alle Komponenten des Systems in dem Gehäuse 11 integriert sind.

Der Raumklimasensor 21 ist bei dem hier dargestellten Ausführungsbeispiel vorzugsweise als Raumtemperatursensor ausgebildet. Der Raumklimasensor 21 kann jedoch zusätzlich oder alternativ einen Luftfeuchtigkeitssensor umfassen. Der Akustiksensor 22 ist vorzugsweise als Mikrofon ausgebildet, das Umgebungsgeräusche aus der Umgebung um das Heizkörperthermostat 10 herum erfasst.

Ferner kann das System einen Tongeber 23 aufweisen, der bei dem Ausführungsbeispiel gemäß Fig. 1 ebenfalls auf der Leiterplatte 13 angeordnet ist. Der Tongeber 23 kann als Mikrolautsprecher ausgebildet sein.

Die Steuereinheit 14 ist vorzugsweise in den Mikrocontroller integriert, der auf der Leiterplatte 13 befestigt ist. Der Mikrocontroller kann ferner eine Auswerteeinheit 24 umfassen. Mit anderen Worten kann die Auswerteeinheit 24 in den Mikrocontroller integriert sein, der auch die Steuereinheit 14 bildet. Alternativ ist es möglich, für die Steuereinheit 14 und die Auswerteeinheit 24 unabhängige Mikrocontroller einzusetzen. Zur Auswerteeinheit 24 gehört vorzugsweise ein Datenspeicher 25, der in Fig. 1 nicht erkennbar ist. Der Datenspeicher 25 kann in den Mikrocontroller integriert oder als separates Modul vorgesehen und mit dem Mikrocontroller verbunden sein.

Über die Leiterplatte 13 sind die Auswerteeinheit 24, der Akustiksensor 22 und die Steuereinheit 14 miteinander signalverbunden. Ebenso besteht zwischen der Auswerteeinheit 24 und dem Raumklimasensor 21 sowie dem Anwesenheitssensor 15 eine Signalverbindung. Die Auswerteeinheit 24 empfängt die vom Akustiksensor 24 erfassten Umgebungsgeräusche bzw. Geräuschdaten, die vom Raumklimasensor 21 erfassten Raumklimadaten und die vom Anwesenheitssensor 15 erfassten Anwesenheitsdaten. In der Auswerteeinheit 24 werden diese Daten verarbeitet. Insbesondere erfolgt eine Verarbeitung der Geräuschdaten, wobei die Auswerteeinheit 24 daraus eine Geräuschsignatur ableitet. Dies kann beispielsweise durch eine Fourier-Analyse erreicht werden. Anhand der durch die Fourier-Analyse ermittelten Frequenzbereiche und damit verbundenen Geräuschsignaturen erfolgt anschließend eine Zuordnung zu bestimmten Ereignissen. Dazu greift die Auswerteeinheit 24 vorzugsweise auf hinterlegte Geräuschsignaturen im Datenspeicher 25 zurück. Die hinterlegten Geräuschsignaturen können aus historischen Geräuschdaten stammen. Alternativ oder zusätzlich können die hinterlegten Geräuschsignaturen auch durch eine algorithmische und/oder stochastische Berechnung bereitgestellt werden.

Die Auswerteeinheit 24 erzeugt auf Basis ihrer Auswertung ein Auswertesignal, das verschiedenen Umgebungsbedingungen zugeordnet ist. Dabei wird unterschieden zwischen der Umgebungsbedingung, wonach ein im Raum befindliches Fenster offensteht, eine zwischen zwei Räumen befindliche Türe offensteht, am Heizungsventil hydraulisch bedingte Geräuschemissionen vorliegen oder wonach ein im Raum befindliches Fenster einem bestimmten Schall- und/oder Wärmedämmwertbereich zuzuordnen ist. Die Zuordnung zu einer der vorgenannten Umgebungsbedingungen findet weitere Verwendung für die Steuerung des Stellantriebs 12 mittels der Steuereinheit 14. Aus den vom Akustiksensor 22 erfassten Umgebungsgeräuschen wird also eine besondere Steuerung des Heizungsventils abgeleitet, die zu einer Effizienzsteigerung im Hinblick auf die Energieeffizienz der Heizungsanlage führt.

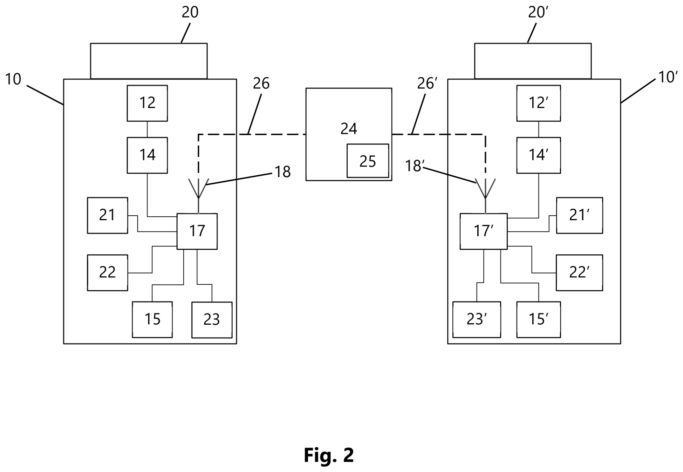

Fig. 2 zeigt eine weitere Ausführungsform des erfindungsgemäßen Systems, wobei zwei Heizkörperthermostate 10, 10' über eine gemeinsame Auswerteeinheit 24 miteinander in Kommunikationsverbindung stehen. Die beiden Heizkörperthermostate 10, 10' weisen jeweils mehrere Komponenten auf, wobei die Komponenten des ersten Heizkörperthermostats 10 und die Komponenten des zweiten Heizkörperthermostats 10' vorzugsweise im Wesentlichen identisch sind. In Fig. 2 sind daher die Komponenten des zweiten Heizkörperthermostats 10' mit denselben Bezugszeichen wie die Komponenten des ersten Heizkörperthermostats 10 versehen, wobei jedoch durch zusätzliche Hochkommata erkennbar ist, dass die jeweiligen Komponenten dem zweiten Heizkörperthermostat 10' zugeordnet sind.

Grundsätzlich kann das System mehr als zwei Heizkörperthermostate 10, 10' aufweisen. Jedes der Heizkörperthermostate 10, 10' kann grundsätzlich einen Aufbau aufweisen, wie er in dem Ausführungsbeispiel gemäß Fig. 1 dargestellt ist. Im Unterschied zu dem Ausführungsbeispiel gemäß Fig. 1 ist jedoch keine Auswerteeinheit 24 im Heizkörperthermostat 10 vorgesehen. Der in Fig. 1 dargestellte Mikrocontroller bildet vorzugsweise lediglich die Steuereinheit 14, 14'. Es ist jedoch nicht ausgeschlossen, dass zumindest ein Teil der Auswertung auch innerhalb des Heizkörperthermostats 10, 10' erfolgt, also auch die einzelnen Heizkörperthermostate 10, 10' bei dem System gemäß Fig. 2 jeweils eine Auswerteeinheit 24 umfassen. Bevorzugt ist es jedoch, wenn die Heizkörperthermostate 10, 10' zumindest mit einer gemeinsamen, übergeordneten Auswerteeinheit 24 signalverbunden sind.

Die Heizkörperthermostate 10, 10' können jeweils Verbindungsflansche 20, 20' zur direkten mechanischen Kopplung an ein Heizungsventil aufweisen. Jedes der Heizkörperthermostate 10, 10' umfasst ein Stellglied 12, 12', das mit einer Steuereinheit 14, 14' verbunden ist. Die Steuereinheit 14, 14' erzeugt Steuerbefehle, die an das Stellglied 12, 12' übertragen werden und das Stellglied 12, 12' veranlassen, den Durchfluss durch ein Heizungsventil zu beeinflussen.

Die Steuereinheit 14, 14' ist jeweils mit einem Funkmodul 17, 17' gekoppelt, über welches die Steuereinheit 14, 14' Auswertesignale der Auswerteeinheit 24 erhält. Das Funkmodul 17, 17' umfasst jeweils eine Funkantenne 18, 18', die eine Funkverbindung 26, 26' zur Auswerteeinheit 24 herstellt.

In jedem Heizkörperthermostat 10, 10' ist ferner ein Raumklimasensor 21, insbesondere ein Raumtemperatursensor, angeordnet. Der Raumklimasensor 21, 21' ist ebenfalls mit dem jeweiligen Funkmodul 17, 17' signalverbunden. Die vom Raumklimasensor 21, 21' ermittelten Raumklimadaten werden so an das Funkmodul 17, 17' übermittelt, welches diese Daten an die Auswerteeinheit 24 weiterleitet.

Ferner weist jedes Heizkörperthermostat 10, 10' einen Anwesenheitssensor 15, 15' auf. Der Anwesenheitssensor 15, 15' ist vorzugsweise als Radarsensor ausgebildet. Die vom Anwesenheitssensor 15, 15' ermittelten Anwesenheitsdaten werden ebenfalls über das Funkmodul 17, 17' an die Auswerteeinheit 24 übermittelt. Die Heizkörperthermostate 10, 10' umfassen außerdem jeweils einen Tongeber 23, 23', der jeweils mit dem Funkmodul 17, 17' verbunden ist. Der Tongeber 23, 23' erhält über das Funkmodul 17, 17' vorzugsweise ein Auslösesignal, das den Tongeber dazu veranlasst, einen akustischen Ton auszugeben.

Die Auswerteeinheit 24 kann in einem Zentralrechner, beispielsweise einem Server integriert sein, der über eine Internetverbindung oder ein lokales Gebäudenetzwerk erreichbar sein kann. Die Funkverbindung 26, 26' kann teilweise funkbasiert, teilweise jedoch auch drahtbasiert, über ein Datennetzwerk, insbesondere das Internet, erfolgen. Vorzugsweise ist die Auswerteeinheit 24 mit allen Heizkörperthermostaten 10, 10', die innerhalb eines Gebäudes installiert sind, verbunden. Auf diese Weise erhält die Auswerteeinheit 24 Daten aller Sensoren der jeweiligen Heizkörperthermostate 10, 10' und kann diese zur verbesserten Steuerung der Heizleistung im Gesamtgebäude auswerten.

Für alle Ausführungsbeispiele gilt, dass das hier beschriebene System vorzugsweise vier unterschiedliche Funktionen erfüllt. Einerseits kann über den Akustiksensor 22, 22' die Erkennung von offenen Fenstern erfolgen. In der Praxis kann dies insbesondere so gestaltet sein, dass über dem Raumklimasensor 21, 21' zunächst erfasst wird, dass sich die Temperatur innerhalb eines Raums rapide ändert, insbesondere absenkt. Zusätzlich kann auch eine rapide Reduktion der Luftfeuchtigkeit ermittelt werden. Aus der schnellen Reduktion der erfassten Raumtemperatur und/oder der erfassten Luftfeuchtigkeit lässt sich schließen, dass ein Fenster geöffnet wurde. Aufgrund dieser Erkennung kann nun ein Impuls erzeugt werden, der die Auswerteeinheit 24, 24' veranlasst, ein Aktivierungssignal an den Akustiksensor 22, 22' zu übermitteln. Der Akustiksensor 22, 22' wird damit aktiviert und erfasst Umgebungsgeräusche. Aus den erfassten Umgebungsgeräuschen kann die Auswerteeinheit 24 anschließend eine oder mehrere Geräuschsignaturen ermitteln. Sofern die Geräuschsignaturen zu vorher im Datenspeicher 25 abgelegten Geräuschsignaturen passend sind, die auf beispielsweise Straßenlärm oder sonstige Außengeräusche wie Vogelzwitschern usw. hinweisen, erzeugt die Auswerteeinheit 24 ein Auswertesignal, das dem Ereignis "Fenster ist weiterhin geöffnet" zugeordnet ist. Vorzugsweise wird der Akustiksensor 22, 22' periodisch aktiviert und lauscht beispielsweise alle fünf Minuten für einen Zeitraum von 5-10 Sekunden, ob eine Geräuschsignatur ermittelt wird, die zu dem Ereignis "Fenster ist geöffnet" passend ist.

Erfasst der Akustiksensor 22, 22' irgendwann eine Geräuschsignatur, welche von der Auswerteeinheit 24 dem Ereignis "Fenster ist geschlossen" zugeordnet wird, so wird der Akustiksensor 22, 22' dauerhaft deaktiviert, bis wieder ein Impuls über die Erfassung des Raumklimas erfolgt, der eine Aktivierung des Akustiksensors 22, 22' auslöst. Ergänzend dazu kann in regelmäßigen Abständen der Akustiksensor 22, 22' aktiviert werden, um Umgebungsgeräusche dann zu erfassen, wenn das Fenster geschlossen ist. Vorzugsweise erfolgt dies in einem Zeitraum, in welchem über den Anwesenheitssensor 15, 15' erkannt wird, dass keine Personen im Raum anwesend sind. Die dann erfassten Umgebungsgeräusche können insbesondere Geräusche sein, die in ihren Ursprung in benachbarten Wohneinheiten haben. Über das Vergleichen der daraus veränderten Geräuschsignaturen beim Zustand "Fenster ist geschlossen" und den Geräuschsignaturen beim Zustand "Fenster ist offen" können Rückschlüsse über den Grad der Schallisolierung des jeweiligen Fensters und somit auch den Grad der Wärmedämmung des jeweiligen Fensters gezogen werden. Konkret kann die Geräuschsignatur im Zustand "Fenster ist offen" eine erste Amplitude A1 aufweisen, wogegen die Geräuschsignatur im Zustand "Fenster ist geschlossen" eine zweite Amplitude A2 aufweisen kann. Die Auswerteeinheit 24 kann die Differenz der beiden Amplituden A1 und A2 dann im Datenspeicher 26 ablegen. Im Datenspeicher 26 können zudem statistische Daten aus Laborergebnissen vorhanden sein, die einen statistischen Zusammenhang zwischen dem Wärmedämmwert (U-Wert) und der Differenz in den frequenzbereichscharfen Amplituden für spezifische Geräuschsignaturen enthalten. Der Vergleich des erfassten Differenzwerts zwischen den Amplituden A1 und den Amplituden A2 mit den im Datenspeicher 25 abgelegten Labordaten bzw. historischen statistischen Daten, ergibt dann einen spezifischen U-Wert für die Fenster in dem Raum. Jedenfalls kann so ein spezifischer Wärmedämmwertbereich erfasst werden. Mithin kann also der Akustiksensor 22, 22' genutzt werden, um Rückschlüsse über die Qualität der Gebäudehülle zu ziehen, die wiederum Einfluss auf die Steuerung des Stellglieds haben kann, um so die Energieeffizienz für das Gesamtgebäude zu verbessern.

Insbesondere in Wohngebäuden werden Strömungs-, Blubber- und/oder Pfeifgeräusche, die am Heizungsventil entstehen können, als unangenehm empfunden. Über den Akustiksensor 22, 22' können die am jeweils zugeordneten Heizungsventil entstehenden Geräusche erfasst werden. Diese Geräusche weisen spezifische Muster auf, die meist einer Regelmäßigkeit unterliegen. Mittels einer Fourier-Analyse in der Auswerteeinheit 24 können diese Geräuschdaten in Frequenzkomponenten zerlegt werden, wobei einerseits Frequenzbereiche und andererseits Amplituden erfasst werden. Konkret kann über eine vorbestimmte Zeit ein Array aus Frequenzbereichen mit jeweils zugehöriger Amplitude aufgebaut werden. Über eine Fourier-Transformation, -Filterung und -Kompression können relevante Muster für spezifisches Blubbern, Pfeifen oder sonstige Strömungsgeräusche erkannt werden. Daraus können Handlungsempfehlungen abgeleitet und über eine Benutzerschnittstelle einem Benutzer zugänglich gemacht werden. Eine solche Handlungsempfehlung kann beispielsweise der Hinweis sein, einen hydraulischen Abgleich erneut durchzuführen. Alternativ können aus diesen Geräuschdaten unmittelbar Steuerbefehle über die Steuereinheit 14, 14' erzeugt werden, die beispielsweise das Stellglied 12, 12' dazu veranlassen, das Heizungsventil etwas mehr zu öffnen, um so entsprechende Strömungsgeräusche zu unterbinden. Insbesondere können auch Steuerbefehle über die Steuereinheit 14, 14' erzeugt werden, die eine Heizungspumpe der Heizungsanlage dazu veranlassen, den Pumpendruck anzupassen, vorzugsweise zu reduzieren.

Insbesondere mit dem Ausführungsbeispiel gemäß Fig. 2, bei welchem zwei Heizkörperthermostate 10, 10' vorgesehen sind, ist eine weitere Funktion des hier beschriebenen Systems nutzbar. Wenn das erste Heizkörperthermostat 10 in einem ersten Raum, und das zweite Heizkörperthermostat 10' in einem zweiten Raum angeordnet sind, wobei die Räume durch eine Türe miteinander verbunden sind, kann über eine Aktivierung des Tongebers 23 des ersten Heizkörperthermostats 10 und einer gleichzeitigen Aktivierung des Akustiksensors 22' des zweiten Heizkörperthermostats 10' erkannt werden, ob die Türe zwischen den beiden betreffenden Räumen geöffnet oder geschlossen ist. In der Praxis ist insbesondere vorgesehen, dass zunächst über die Anwesenheitssensoren 15, 15' erfasst wird, ob sich Personen oder Lebewesen in den beiden Räumen befinden. Wird über die beiden Anwesenheitssensoren 15, 15' die Feststellung getroffen, dass sich in beiden Räumen keine Personen befinden, kann zu einem bestimmten Zeitpunkt der Akustiksensor 22' des zweiten Heizkörperthermostats 10' aktiviert werden. Die Auswerteeinheit 24 kann dann dem Tongeber 23 des ersten Heizkörperthermostats 10 ein Signal senden, das den Tongeber 23 dazu veranlasst, ein Schallsignal in einer vorbestimmten Frequenz auszusenden. Wenn nun die Türe zwischen den beiden betreffenden Räumen geschlossen ist, wird das Tonsignal den Akustiksensor 22' des zweiten Heizkörperthermostats 10' nicht erreichen. Erfasst also der Akustiksensor 22' des zweiten Heizkörperthermostats 10' in einem vorbestimmten Zeitfenster kein spezifisches Tonsignal, so gibt die Auswerteeinheit 24 ein Auswertesignal aus, das dem Zustand "Türe ist geschlossen" entspricht. Wird hingegen in einem vorbestimmten Zeitintervall über den Akustiksensor 22' des zweiten Heizkörperthermostats 10' das spezifische Tonsignal erfasst, so erzeugt die Auswerteeinheit 24 ein Auswertesignal, das dem Zustand "Türe ist offen" entspricht. Anhand dieses Auswertesignals können dann die Steuereinheiten 14, 14' der beiden Heizkörperthermostate 10, 10' dazu veranlasst werden, ihre jeweils zugeordneten Stellglieder 12, 12' anzusteuern, um eine vorbestimmte Heizungsventilstellung einzustellen. So können Raumtemperaturen entsprechend energieeffizient angepasst werden. Ergänzend hierzu ist es denkbar, dass das Auswertesignal der Auswerteeinheit 24 genutzt wird, um über eine Benutzerschnittstelle einem Benutzer entsprechende Handlungsanweisungen oder Hinweise über den Zustand der Türe zugänglich gemacht werden.

### Bezugszeichenliste

- 10, 10': Heizkörperthermostat
- 11, 11': Gehäuse
- 12, 12': Stellglied
- 13: Leiterplatte
- 14, 14': Steuereinheit
- 15, 15': Anwesenheitssensor
- 16: Energiepufferspeicher
- 17, 17': Funkmodul
- 18, 18': Funkantenne
- 19: Anzeigeelement
- 20, 20': Verbindungsflansch
- 21, 21': Raumklimasensor
- 22, 22': Akustiksensor
- 23, 23': Tongeber
- 24: Auswerteeinheit
- 25: Datenspeicher
- 26, 26': Funkverbindung

## Patentansprüche

1. System zur Steuerung eines Heizungsventils in einem Raum eines Gebäudes mit einem elektromechanischen Stellglied (12) zur Einstellung eines Durchflusses des Heizungsventils, wenigstens einem Raumklimasensor (21) zur Erfassung von Raumklimadaten, einem Akustiksensor (22) zur Erfassung von Umgebungsgeräuschen und einer Steuereinheit (14) zur Steuerung des Stellglieds (12), wobei das System eine Auswerteeinheit (24) zur Auswertung von Sensordaten aufweist, die mit dem Akustiksensor (22) zur Auswertung der erfassten Umgebungsgeräusche signalverbunden ist, und wobei die Steuereinheit (14) mit der Auswerteeinheit (24) signalverbunden ist, um das Stellglied (12) in Abhängigkeit der vom Akustiksensor (22) erfassten Umgebungsgeräusche zu steuern,
**dadurch gekennzeichnet, dass**
die Auswerteeinheit (24) einen Datenspeicher (25) umfasst und konfiguriert ist, um basierend auf den erfassten Umgebungsgeräuschen spezifische Geräuschsignaturen zu ermitteln, diese mit im Datenspeicher (25) hinterlegten Geräuschsignaturen zu vergleichen und ein Auswertesignal zu erzeugen, das einer der folgenden Umgebungsbedingungen zugeordnet ist:
a) Offenstehen eines im Raum befindlichen Fensters, insbesondere wobei das Fenster zu einer Außenumgebung hin offensteht,
b) Offenstehen einer zwischen zwei Räumen befindlichen Türe,
c) hydraulisch bedingte Geräuschemissionen am Heizungsventil, und
d) Dämmwertbereich eines im Raum befindlichen Fensters.

2. System nach einem der vorhergehenden Ansprüche
**dadurch gekennzeichnet, dass**
das System einen Anwesenheitssensor (15) zur Erfassung von Anwesenheitsdaten über die Anwesenheit von Lebewesen im Raum aufweist, der mit der Auswerteeinheit (24) signalverbunden ist, wobei die Auswerteinheit (24) konfiguriert ist, um die Anwesenheitsdaten auszuwerten und die Steuereinheit (14) dazu zu veranlassen, das Stellglied (12) in Abhängigkeit der vom Anwesenheitssensor (15) erfassten Anwesenheitsdaten zu steuern.

3. System nach Anspruch 2
**dadurch gekennzeichnet, dass**
der Anwesenheitssensor (15) vom Akustiksensor (22) unabhängig ist.

4. System nach Anspruch 2 oder 3
**dadurch gekennzeichnet, dass**
der Anwesenheitssensor (15), insbesondere ausschließlich, einen Radarsensor umfasst.

5. System nach einem der vorhergehenden Ansprüche
**dadurch gekennzeichnet, dass**
der Akustiksensor (22) einen Grundzustand aufweist, in welchem der Akustiksensor (22) deaktiviert ist.

6. System nach einem der vorhergehenden Ansprüche
**dadurch gekennzeichnet, dass**
der Akustiksensor (22) durch ein Aktivierungssignal der Auswerteeinheit (24) in einen Betriebszustand überführbar ist, wobei die Auswerteeinheit (24) konfiguriert ist, das Aktivierungssignal zu erzeugen, wenn eine anhand der Auswertung des Raumklimasensors (21) und/oder des Anwesenheitssensors (15) vorbestimmte Aktivierungsbedingung erfüllt ist.

7. System nach Anspruch 6
**dadurch gekennzeichnet, dass**
das System ein Heizkörperthermostat (10) mit einem Gehäuse (11) umfasst, wobei der Raumklimasensor (21), der Akustiksensor (22), der Anwesenheitssensor (15), das Stellglied (12) und/oder die Steuereinheit (14) innerhalb des Gehäuses (11) angeordnet ist.

8. System nach Anspruch 7
**dadurch gekennzeichnet, dass**
das Heizkörperthermostat (10), insbesondere das Gehäuse (11), einen Verbindungsflansch (20) zur mechanischen Kopplung an das Heizungsventil aufweist.

9. System nach Anspruch 7 oder 8
**dadurch gekennzeichnet, dass**
das Heizkörperthermostat (10), insbesondere innerhalb des Gehäuses (11), einen thermoelektrischen Generator zur Erzeugung von elektrischer Energie aus einer Temperaturdifferenz zwischen einem das Heizungsventil durchströmenden Wärmemediums und der Umgebung aufweist.

10. System nach einem der vorhergehenden Ansprüche
**dadurch gekennzeichnet, dass**
das System, insbesondere innerhalb des Gehäuses (11) des Heizkörperthermostats (10), einen akustischen Tongeber (23) umfasst.

11. System nach einem der vorhergehenden Ansprüche
**dadurch gekennzeichnet, dass**
der Raumklimasensor (21) einen Raumtemperatursensor zur Erfassung einer Raumtemperatur und/oder einen Luftfeuchtigkeitssensor zur Erfassung der relativen Raumluftfeuchte umfasst.

12. System nach einem der vorhergehenden Ansprüche
**dadurch gekennzeichnet, dass**
mehrere Heizkörperthermostate (10, 10') vorgesehen sind, die mittels der Auswerteeinheit (24) miteinander signalverbunden sind.

13. System nach Anspruch 12
**dadurch gekennzeichnet, dass**
die Auswerteeinheit (24) konfiguriert ist, die Sensordaten der Heizkörperthermostate (10) gemeinsam auszuwerten und Auswertesignale zur Übermittlung an die Steuereinheiten (14, 14') der einzelnen Heizkörperthermostate (10, 10') zu erzeugen, so dass eine raumübergreifende, insbesondere Wohneinheiten übergreifende, Heizungssteuerung erfolgt.

14. System nach einem der vorhergehenden Ansprüche
**dadurch gekennzeichnet, dass**
die Auswerteeinheit (24) im Heizkörperthermostat (10), insbesondere innerhalb des Gehäuses (11), angeordnet ist.

15. System nach einem der vorhergehenden Ansprüche
**dadurch gekennzeichnet, dass**
das Heizkörperthermostat ein Funkmodul (17) umfasst, das den Akustiksensor (22) und/oder die Steuereinheit (14) mit der Auswerteeinheit (24) signalverbindet.

16. Verfahren zur Steuerung eines Heizungsventils in einem Raum eines Gebäudes mit einem elektromechanischen Stellglied (12) zur Einstellung eines Durchflusses des Heizungsventils, einen Raumtemperatursensor (21) zur Erfassung der Raumtemperatur, einen Akustiksensor (22) zur Erfassung von Umgebungsgeräuschen und einer Steuereinheit (14) zur Steuerung des Stellglieds (12), wobei
- mittels des Akustiksensors (22) Umgebungsgeräusche erfasst und als Geräuschdaten an eine Auswerteeinheit (24) übermittelt werden,
- die Auswerteeinheit (24) aus den Geräuschdaten spezifische Geräuschsignaturen ermittelt, diese mit in einem Datenspeicher (25) der Auswerteeinheit (24) hinterlegten Geräuschsignaturen vergleicht und aus diesem Vergleich jeweils ein Auswertesignal erzeugt, das einer der folgenden Umgebungsbedingungen zugeordnet ist:
a) wenigstens ein Fenster im Raum steht offen,
b) wenigstens eine zwischen zwei Räumen befindliche Türe steht offen,
c) vom Heizungsventil oder Heizkörper werden hydraulisch bedingte Geräusche emittiert, und
d) im Raum befindliche Fenster weisen einen Dämmwert innerhalb eines Dämmwertbereichs auf,
und wobei die Steuereinheit (14) das Stellglied (12) anhand des jeweiligen Auswertesignals der Auswerteeinheit (24) steuert.
